# FASCICULE DE BREVET EUROPEEN

(11) **EP 0 800 183 B1**
(45) Date de publication et mention de la délivrance du brevet: **22.08.2001**
(21) Numéro de dépôt: 97400735.3
(22) Date de dépôt: 01.04.1997
(51) Int. Cl.: H01F 1/34, C04B 35/26

(54) **Ferrite à faibles pertes entre 1 MHz et 100 MHz et procédé de réalisation**
Ferrit mit niedrigen Verlusten zwischen 1MHz und 100 MHz und Herstellungsverfahren
Ferrite with low losses within 1MHz and 100 MHz and manufacturing process

(30) Priorité: 05.04.1996 FR 9604316
(43) Date de publication de la demande: 08.10.1997
(73) Titulaire: THOMSON-CSF, 75008 Paris (FR)
(72) Inventeur: Lebourgeois, Richard, Thomson-CSF S.C.P.I., 94117 Arcueil cedex (FR); Le Fur, Adèle, Thomson-CSF S.C.P.I., 94117 Arcueil cedex (FR); Rohart, Claude, Thomson-CSF S.C.P.I., 94117 Arcueil cedex (FR)

(56) Documents cités:
- EP-A- 0 532 788
- JOURNAL OF APPLIED PHYSICS, vol. 69, no. 8, 15 Avril 1991, pages 6192-6194, XP000241107 HAHN H T: "THE SUBSTITUTION OF COBALT FOR NICKEL IN STOICHIOMETRIC NICKEL-ZINC FERRITE"
- 1995 DIGESTS OF INTERMAG. INTERNATIONAL MAGNETICS CONFERENCE, SAN ANTONIO, APR. 18 - 21, 1995, 18 Avril 1995, INSTITUTE OF ELECTRICAL AND ELECTRONICS ENGINEERS, page JP-09 XP000582282 NAM J H ET AL: "THE EFFECT OF CU SUBSTITUTION ON THE ELECTRICAL AND MAGNETIC PROPERTIES OF NIZA FERRITES"
- PATENT ABSTRACTS OF JAPAN vol. 013, no. 343 (E-796), 2 Août 1989 & JP 01 101610 A (NIPPON FERRITE LTD), 19 Avril 1989,
- PATENT ABSTRACTS OF JAPAN vol. 96, no. 9 & JP 08 133826 A (KYOCERA CORP)

## Description

Le domaine de l'invention est celui des matériaux ferrites utilisés à haute et très haute fréquences (1 MHz à 100 MHz) et notamment des matériaux présentant de faibles pertes magnétiques et de basses températures de fabrication.

De tels matériaux sont particulièrement recherchés pour la réalisation d'inductances de petites dimensions, utilisés dans des dispositifs de filtrage fonctionnant entre 1 MHz et 100 MHz et plus généralement pour la réalisation à basse température de noyaux magnétiques ayant de faibles pertes.

Actuellement, le développement des matériels électroniques, tant dans des applications civiles que militaires, est lié à la miniaturisation de composants actifs et passifs utilisés. Parmi ces composants, les plus volumineux sont les composants passifs qui réalisent les fonctions résistance, capacité et plus particulièrement inductance.

Dans des applications utilisant des inductances dites "bas niveau" mettant en oeuvre de faibles puissances électriques, les pertes du composant sont représentées par le coefficient de surtension Q = Lω/R, avec L l'inductance série, ω la pulsation et R la résistance série. Plus ce coefficient Q est élevé, meilleure est la qualité du circuit électrique correspondant.

Les ferrites présentant des coefficients de surtension élevés (supérieurs à 100) dans des applications hautes fréquences (supérieure au MégaHertz) sont généralement des ferrites mixtes de nickel-zinc. Ils sont utilisés comme noyaux magnétiques de formes variées (tores, pots, bâtonnets, ...) permettant la réalisation d'inductances bobinées, la partie bobinage étant réalisée à l'aide de fil de cuivre émaillé. Cependant, ces matériaux présentent des températures de fabrication élevée. Leur température de chamottage (traitement thermique ayant pour but de former la phase cristalline recherchée) est voisine de 1 000°C à 1 100°C. Leur température de frittage (traitement thermique ayant pour but la formation complète de la phase cristalline et la densification de cette phase cristalline) est voisine de 1 200°C à 1 350°C.

De tels matériaux ne peuvent donc pas être utilisés pour réaliser des inductances de faibles dimensions encore appelées micro-inductances, dans lesquelles on intègre les parties noyau magnétique et bobinage en cofrittant le ferrite du noyau magnétique avec le métal du bobinage (classiquement de l'argent).

En effet, à l'heure actuelle, les micro-inductances fonctionnant notamment entre 1 MHz et 100 MHz sont réalisées à partir de ferrites ayant des températures de frittage relativement basses (inférieures à 1 000°C), indispensables pour empêcher la réaction chimique du métal et notamment de l'argent, réaction qui aurait pour conséquence la dégradation des propriétés électriques du métal et des propriétés électromagnétiques du ferrite. Les matériaux utilisés pour ces applications font partie de la famille des ferrites de nickel-zinc-cuivre qui présentent des propriétés électromagnétiques proches de celles des ferrites de nickel-zinc. L'apport de cuivre sous forme d'oxyde permet de fritter ces matériaux à des températures comprises entre 900°C et 1 000°C, cependant il dégrade les coefficients de surtension qui chutent à des valeurs comprises entre 20 et 60, pour les micro-inductances.

Dans ce contexte, la présente invention propose une famille de ferrites présentant des températures de chamottage et frittage inférieures à environ 1 000°C et permettant de réaliser des inductances ayant des coefficients de surtension supérieurs à une valeur voisine de 100.

L'invention a donc pour objet un matériau ferrite à faibles pertes magnétiques dans une gamme fréquence voisine de 1 MégaHertz à 100 MégaHertz caractérisé en ce qu'il répond à la formule chimique suivante :

NiₓZn_{y}Cu_{z}CO_{ε}Fe_{2±δ} O₄

avec x + y + z + ε = 1 ± δ
δ ≤ 0,05
0,02 ≤ ε ≤ 0,04
0,1 ≤ z ≤ 0,35
0,05 ≤ y ≤ 0,40

Ces matériaux présentent le double avantage :
- de pouvoir être utilisés pour la production industrielle de noyaux magnétiques haute fréquence et très haute fréquence dans le but de diminuer de façon significative les températures de chamottage et de frittage ;
- de pouvoir être utilisés pour la production industrielle de micro-inductances dans le but d'améliorer les coefficients de surtension des micro-inductances conventionnelles.

L'invention a aussi pour objet un composant inductif fonctionnant dans une gamme de fréquences voisines de 1 à 100 MHz caractérisé en ce qu'il comprend un matériau ferrite selon l'invention.

L'invention a encore pour objet un procédé de fabrication d'un matériau ferrite répondant à la formule chimique suivante :

NiₓZn_{y}Cu_{z}Co_{ε}Fe_{2±δ} O₄

avec x + y + z + ε = 1 ± δ
δ ≤ 0,05
0,02 ≤ ε ≤ 0,04
0,1 ≤ z ≤0,35
0,05 ≤ y ≤ 0,40
comprenant une étape de frittage de poudre obtenue par broyage de matières premières caractérisé en ce que l'étape de frittage est effectuée à une température inférieure à environ 1 000°C.

Avantageusement, le procédé de fabrication d'un matériau ferrite selon l'invention comprend également une étape de chamottage effectuée à une température voisine de 750 à 850°C.

L'invention sera mieux comprise et d'autres avantages apparaîtront à la lecture de la description qui va suivre donnée à titre non limitatif et grâce aux figures annexées parmi lesquelles :
- la figure 1 illustre la perméabilité complexe d'un premier exemple de matériau ferrite selon l'invention en fonction de la fréquence ;
- la figure 2 illustre la perméabilité complexe d'un second exemple de matériau ferrite selon l'invention, en fonction de la fréquence ;
- la figure 3 illustre la perméabilité complexe en fonction de la fréquence, pour deux ferrites Ni-Zn-Cu respectivement substitué au cobalt et non substitué au cobalt.

De façon générale, les matériaux ferrites selon l'invention peuvent être réalisés en utilisant la technologie industrielle conventionnelle comprenant les principales opérations suivantes :

### - Pesée des matières premières suivantes

Oxyde de nickel (NiO), oxyde de zinc (ZnO), oxyde de fer (Fe₂O₃) oxyde de cuivre (CuO) et oxyde de cobalt (CO₃O₄).

Lors de la pesée de l'oxyde de fer, il est nécessaire de compenser l'apport de fer dû à l'usure des éléments de broyage qui sont généralement des billes ou des barreaux d'acier.

### - Broyage des matières premières

Cette opération a pour double but de mélanger les différents constituants et de réduire leur taille de grains, les rendant ainsi plus réactifs.

### - Chamottage de la poudre

Ce traitement thermique a pour but de former en partie la phase cristalline recherchée. Cette opération peut typiquement être réalisée entre 750°C et 850°C selon la nature recherchée du matériau ferrite de l'invention, sous air durant environ 2 heures.

### - Rebroyage du produit de chamottage

Cette opération est rendue nécessaire par le grossissement des grains de poudre induit par le chamottage. Elle est effectuée dans des conditions analogues à celles du premier broyage.

### - Pressage de la poudre

II est réalisé à l'aide de moules en acier et de presses mécaniques axiales pouvant délivrer des pressions de l'ordre de 1t/cm².

### - Frittage

Ce traitement thermique a pour but la formation complète de la phase cristalline recherchée ainsi que la densification de la céramique polycristalline. Pour les matériaux ferrites faisant l'objet de la présente invention, ce traitement peut être réalisé à des températures voisines de 900°C à 1 000°C, avec un temps de palier allant de 2 heures à 15 heures.

### Exemple 1 : Matériau ferrite à faibles pertes magnétiques dans une gamme de fréquence de 1 MégaHertz à 30 MégaHertz.

Un matériau ferrite de nickel-zinc-cuivre substitué au cobalt de composition chimique Ni_{0,35}Zn_{0,35}Cu_{0,28}Co_{0,02}Fe₂O₄ est réalisé en utilisant le procédé industriel précédemment décrit, en réalisant un frittage sous air à 930°C pendant 2 heures.

Ce matériau présente un moment magnétique à saturation σₛₐₜ égal à 73 uem/g donc une aimantation à saturation de 4 800 Gauss.

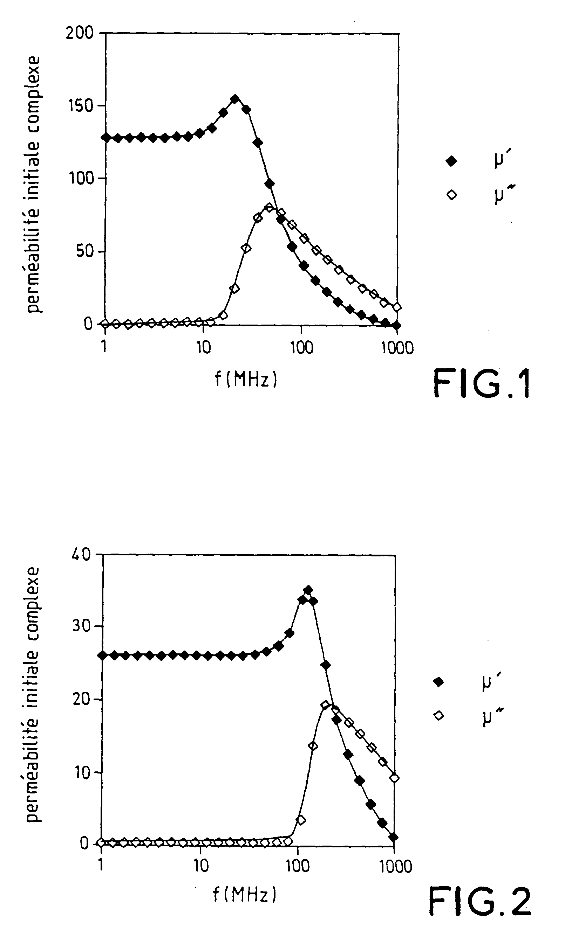

Sa masse volumique p vaut 4,95 g/cm³. Son spectre de perméabilité initiale complexe (correspondant au rapport de l'induction sur le champ magnétique pour des champs magnétiques de faible amplitude) en fonction de la fréquence est donné en figure 1.

Les pertes magnétiques représentées par la partie imaginaire µ" sont très faibles (µ" est inférieur à 0,1 jusqu'à environ 10 MégaHertz).

La partie réelle de la perméabilité µ' reste toujours supérieure à une valeur voisine de 130 avec un maximum de 155 à 20 MégaHertz.

Ce matériau ferrite est donc particulièrement bien adapté à des applications dans une gamme de 1 à 30 MégaHertz. Il permet dans cette gamme de fréquence, de réaliser des inductances à partir de tores bobinés ayant des coefficients de surtension élevés et plus particulièrement à des fréquences comprises entre 2 et 3 MégaHertz avec des coefficients de surtension supérieurs ou égaux à 150.

### Exemple 2 : Matériau ferrite à faibles pertes magnétiques à très haute fréquence comprise entre 30 MégaHertz et 100 MégaHertz.

Un matériau ferrite de nickel-zinc-cuivre substitué au cobalt, de composition chimique Ni_{0,747}Zn_{0,083}Cu_{0,15}Co_{0,02}Fe₂O₄ est réalisé en utilisant le procédé précédemment décrit, en réalisant un frittage sous air à 950°C pendant 5 heures.

Ce matériau présente un moment magnétique à saturation τₛₐₜ égal à 55 uem/g d'où une aimantation à saturation de 3 600 Gauss.

Sa masse volumique ρ est égale à 4,80 g/cm³. Son spectre de perméabilité en fonction de la fréquence est donnée en figure 2.

Les pertes magnétiques représentées par la partie imaginaire µ" sont très faibles (µ" ≤ 0,1 jusqu'à environ 100 MégaHertz) alors que la partie réelle de la perméabilité µ' reste toujours supérieure à 26 avec un maximum de 35 à 125 MégaHertz.

Un tel matériau ferrite est donc particulièrement bien adapté à des dispositifs sans pertes fonctionnant à très haute fréquence.

### Comparaison de deux matériaux ferrites NiZnCu de composition très voisine substitué et non substitué en cobalt

Ces matériaux répondent aux formules chimiques respectives suivantes :
Ni_{0,747}Zn_{0,083}Cu_{0,15}Co_{0,02}Fe₂O₄
et Ni_{0,763}Zn_{0,085}Cu_{0,152}Fe₂O₄
et ont été frittés dans les mêmes conditions (température de frittage 970°C durant 2 heures sous air).

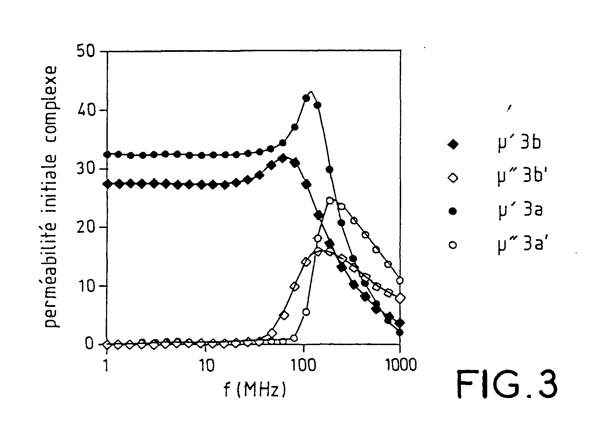

La figure 3 illustre la perméabilité en fonction de la fréquence pour ces deux matériaux ferrites.

Les courbes 3a et 3b représentent respectivement les perméabilités réelles µ' des ferrites substitué et non substitué.

Les courbes 3a' et 3b' représentent respectivement les perméabilités imaginaires µ" des ferrites substitués et non substitués.

Il apparaît clairement que le ferrite substitué au cobalt et élaboré selon le procédé de l'invention, présente le double avantage d'avoir une perméabilité µ' plus grande et des pertes magnétiques µ" plus faibles entre 1 MégaHertz et 100 MégaHertz.

## Revendications

1. Matériau ferrite à faibles pertes magnétiques dans une gamme de fréquences voisine de 1 MégaHertz à 100 MégaHertz caractérisé en ce qu'il répond à la formule chimique suivante :
NiₓZn_{y}Cu_{z}Co_{ε}Fe_{2±δ}O₄
avec x + y + z + ε =1 ± δ
δ ≤ 0,05
0,02 ≤ ε ≤ 0,04
0,1 ≤ z ≤ 0,35
0,05 ≤ y ≤ 0,40

2. Matériau ferrite à faibles pertes magnétiques dans une gamme de fréquences voisine de 1 MégaHertz à 30 MégaHertz caractérisé en ce qu'il répond à la formule chimique suivante :
Ni_{0,35}Zn_{0,35}Cu_{0,28}Co_{0,02}Fe₂O₄

3. Matériau ferrite à faibles pertes magnétiques dans une gamme de fréquences voisine de 30 MégaHertz à 100 MégaHertz caractérisé en ce qu'il répond à la formule chimique suivante :
Ni_{0,75}Zn_{0,08}Cu_{0,15}Co_{0,02}Fe₂O₄

4. Composant inductif fonctionnant dans une gamme de fréquences voisines de 1 MégaHertz à 100 MégaHertz caractérisé en ce qu'il comprend un matériau selon la revendication 1.

5. Micro-inductance comprenant un noyau magnétique en matériau ferrite et un bobinage en matériau conducteur du type Argent, intégré au noyau magnétique caractérisé en ce que le matériau ferrite est un matériau selon la revendication 1.

6. Procédé de fabrication d'un matériau ferrite selon la revendication 1, comprenant une étape de frittage de poudre obtenue par broyage de matières premières caractérisé en ce que l'étape de frittage est effectuée à une température inférieure à environ 1 000°C.

7. Procédé de fabrication selon la revendication 6, caractérisé en ce qu'il comprend une étape de chamottage effectuée à une température voisine de 750 à 850°C.

## Patentansprüche

1. Ferritmaterial mit geringen magnetischen Verlusten in einem Frequenzbereich etwa zwischen 1 MHz und 100 MHz, dadurch gekennzeichnet, daß es der folgenden chemischen Formel entspricht:
NiₓZn_{y}Cu_{z}Co_{ε}Fe_{2±δ}O₄
wobei gilt:
x + y + z + ε = 1 ± δ
δ ≤ 0,05
0,02 ≤ ε ≤ 0,04
0,1 ≤ z ≤ 0,35
0,05 ≤ y ≤ 0,40

2. Ferritmaterial mit geringen magnetischen Verlusten in einem Frequenzbereich etwa zwischen 1 MHz und 30 MHz, dadurch gekennzeichnet, daß es der folgenden chemischen Formel entspricht:
Ni_{0,35}Zn_{0.35}Cu_{0.28}Co_{0.02}Fe₂O₄

3. Ferritmaterial mit geringen magnetischen Verlusten in einem Frequenzbereich etwa zwischen 30 MHz und 100 MHz, dadurch gekennzeichnet, daß es der folgenden chemischen Formel entspricht:
Ni_{0,75}Zn_{0,08}Cu_{0,15}Co_{0,02}Fe₂O₄

4. Induktives Bauelement für einen Betrieb in einem Frequenzbereich etwa zwischen 1 MHz und 100 MHz, dadurch gekennzeichnet, daß es ein Material gemäß Anspruch 1 enthält.

5. Mikroinduktivität mit einem Magnetkern aus Ferritmaterial und mit einer Wicklung aus einem leitenden Material vom Silbertyp, die in den Magnetkern integriert ist, dadurch gekennzeichnet, daß das Ferritmaterial ein Material nach Anspruch 1 ist.

6. Verfahren zur Herstellung eines Ferritmaterials nach Anspruch 1 mit einem Verfahrensschritt der Sinterung eines Pulvers, das durch Mahlen von Ausgangsmaterialien erhalten wird, dadurch gekennzeichnet, daß der Verfahrensschritt der Sinterung bei einer Temperatur von unterhalb etwa 1000°C erfolgt.

7. Herstellungsverfahren nach Anspruch 6, dadurch gekennzeichnet, daß es einen Verfahrensschritt der Schamottierung bei einer Temperatur etwa zwischen 750 und 850°C aufweist.

## Claims

1. A ferrite material with low magnetic losses in a range of frequencies of around 1 megahertz to 100 megahertz, characterized in that it complies with the following chemical formula:
NiₓZn_{y}Cu_{z}Co_{ε}Fe_{2±δ}O₄
with
x + y + z + ε = 1 ± δ
δ ≤ 0.05
0.02 ≤ ε ≤ 0.04
0.1 ≤ z ≤ 0.35
0.05 ≤ y ≤ 0.40

2. A ferrite material with low magnetic losses in a range of frequencies of around 1 megahertz to 30 megahertz, characterized in that it complies with the following chemical formula:
Ni_{0.35}Zn_{0.35}Cu_{0.28}Co_{0.02}Fe₂O₄

3. A ferrite material with low magnetic losses in a range of frequencies of around 30 megahertz to 100 megahertz, characterized in that it complies with the following chemical formula:
Ni_{0.75}Zn_{0.08}Cu_{0.15}Co_{0.02}Fe₂O₄

4. An inductive component functioning in a range of frequencies of around 1 megahertz to 100 megahertz, characterized in that it consists of a material according to Claim 1.

5. A micro-inductor comprising a magnetic core made of ferrite material and a winding made of conductive material of the silver type and integrated into the magnetic core, characterized in that the ferrite material is a material according to Claim 1.

6. A method of manufacturing a ferrite material according to Claim 1, including a step for sintering the powder obtained by crushing raw materials, characterized in that the sintering step is carried out at a temperature of less than approx. 1,000°C.

7. A manufacturing method according to Claim 6, characterized in that it includes a firing step carried out at a temperature of around 750 to 850°C.
